# EUROPEAN PATENT SPECIFICATION

(11) **EP 0 578 349 B1**
(45) Date of publication and mention of the grant of the patent: **01.05.1996**
(21) Application number: 93301858.2
(22) Date of filing: 11.03.1993
(51) Int. Cl.: H02G 15/184, H02G 15/103

(54) **Cable joints**
Kabelverbindungen
Jonctions de câbles

(30) Priority: 12.03.1992 GB 9205339; 21.03.1992 GB 9206235
(43) Date of publication of application: 12.01.1994
(73) Proprietor: BICC Public Limited Company, London W1X 5FH (GB)
(72) Inventor: Pawley, Ronald James Elliot, St. Helens, Merseyside WA11 9AF (GB); Lamb, David William, Birkenhead, Merseyside L34 3BG (GB); Owen, John, Rainhill, Merseyside (GB)
(74) Representative: Poole, Michael John

(56) References cited:
- EP-A- 0 321 263
- FR-A- 2 134 236
- US-A- 3 816 639
- US-A- 4 079 189
- US-A- 4 412 029
- US-A- 4 822 952

## Description

This invention relates to electric cable joints, and more particularly to joints of the kind used (mainly by utilities (distribution Companies) and industrial users) at voltages in the range from domestic supply voltages to about 36 kV that are encapsulated in resin that is introduced into a joint enclosure or a mould in a fluid state and caused or allowed to harden. In such joints, only a small part of the total volume is subject to any significant electrical stress, and there is scope for substantial cost saving if a simple and reliable way can be found to localise the significant electrical stresses in relatively small components of electrical-grade material, so permitting the use of a material with with relatively modest electrical properties.

A known way of achieving this objective (GB 2211368A) in such a resin-encapsulated joint uses for each line (or phase) conductor a sleeve of electrical-grade insulating material with an internal tubular electrode of "semiconducting" material (meaning a material with a conductance that is substantial but less than that of a metal); not only is this a relatively expensive subassembly to make, but it also requires skill in assembly to ensure that the electrode is in effective and stable contact with the conductor to which the subassembly is applied.

In accordance with the present invention, an electric cable joint comprises at least one joint between line or phase conductors of the jointed cables that is surrounded by a sleeve made of electrically insulating material and encapsulated with it in a body of resin that is introduced into a joint enclosure or a mould in a fluid which has state caused or allowed to harden, said resin having electrical properties inferior to those of the sleeve, and is characterised by the sleeve being made of a material with a relative permittivity in the range from 6 to 20.

Suitable high-permittivity insulating materials can be formulated on the basis of appropriate combinations of polymer and filler; rigid, flexible or elastic materials can be used as preferred. At present we prefer to use rubbers based on chlorosulphonated polyethylene, but many alternatives, including thermoplastic ones, are available. The polymer base may have a relatively low permittivity if a high-permittivity filler (such as barium titanate) is used.

The sleeve may be a simple cylindrical sleeve, or it may be formed with flanges or other appropriate shaped parts to ensure correct positioning. Moulded sleeves are preferred, since they can more easily be formed with smooth end-parts than sleeves cut from extruded stock.

For ease of assembly, the sleeve is preferably a loose fit over the insulated conductor to which it is to be applied; since there is no requirement (or opportunity) for electrical connection, a nominal radial clearance of the order of 0.5 mm can be allowed without difficulty and without requiring precautions to ensure concentricity.

Any clearances within the sleeve are preferably filled with the resin, and the shape of the sleeve should be designed to facilitate this; in particular, we prefer to form the sleeve with internal projections to ensure a minimum spacing between all parts of the internal surface of the sleeve and the jointed conductors within, in order to facilitate flow of resin and air and to minimise the risk of trapping air within the sleeve. The shape of the projections is not of major importance, provided they allow ready escape of air through the ends of the sleeve; simple longitudinal ribs are effective and easy to form whether by moulding or extrusion. A minimum of three ribs is needed to ensure the required spacing, and we prefer to use four ribs; more than four ribs can be used, but large numbers are undesirable as conflicting with the desire to have large passages for flow of liquid resin and air.

The invention will be further described, by way of example, with reference to the accompaying drawings, in which;
Figure 1 is a diagrammatic cross-section of one form of cable joint in accordance with the invention;

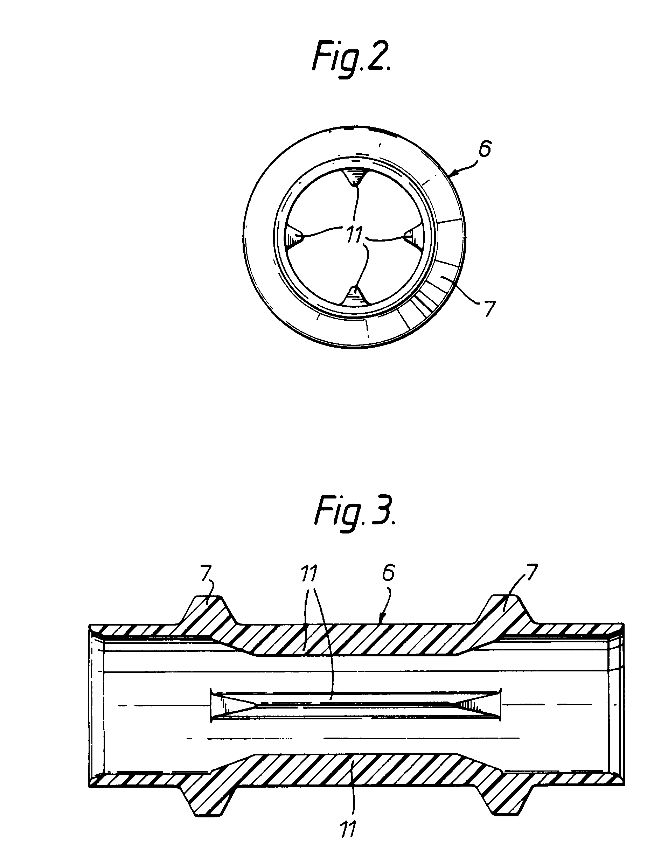

Figure 2 is an end view of a sleeve used in the joint of figure 1; and
Figure 3 is a longitudinal cross-section of the sleeve of Figure 2.

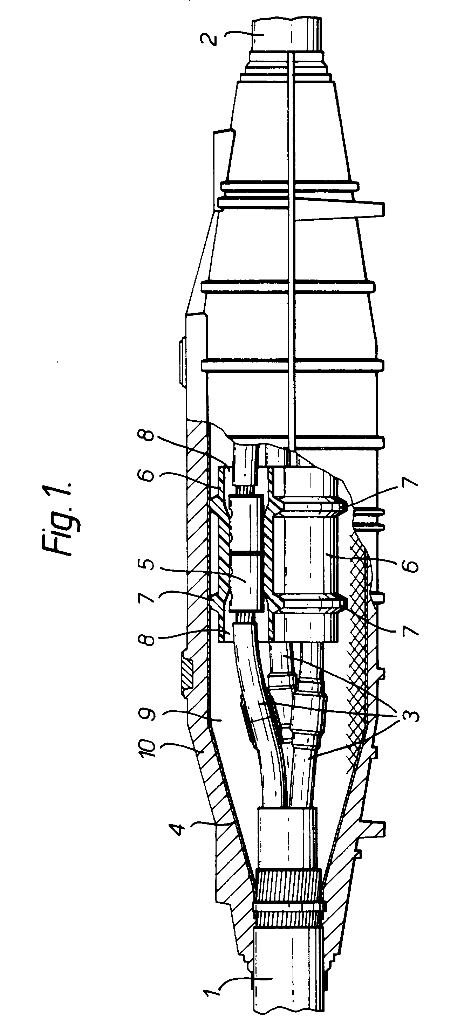

For the purpose of illustration, Figure 1 shows a straight joint between two cables 1,2 each having three phase conductors 3 and a combined neutral and earth conductor which is connected by any conventional form of bond 4 which is shown only diagrammatically as it is immaterial to the invention.

The respective pairs of phase conductors are prepared and jointed in a conventional manner, say using mechanical connectors 5 or compression ferrules, after sliding over one conductor end of each pair an insulating sleeve 6 which is eventually positioned so as to overlap the insulation remaining on each of the joined conductor ends.

In accordance with the invention, the sleeves 6,6 are made of an insulating material with a relative permittivity of about 10 and of the composition shown in Table 1.

The sleeves 6,6 are formed with flanges 7 which bear on each other to assist in correct spacing of the conductors, and with smoothly tapered mouths 8 which both ensure even distribution of electrical stresses in this region and also assist in ensuring satisfactory elimination of air when the assembly is embedded in resin 9 which fills joint enclosure 10. Additionally, they are formed with four internal ribs 11 of rounded vee section, as a further aid to elimination of air.

The resin 9 may be a low-voltage, heavily-filled grade of polyurethane resin, for example; acrylic or epoxide-based resins can also be used.

**TABLE 1**

| Ingredient | parts by weight |
|---|---|
| Chlorosulphonated polyethylene (sold by DuPont (UK) Ltd under the trademark Hypalon 40) | 39.80 |
| China clay filler (sold by ECC International Ltd under the trademark Speswhite) | 25.35 |
| Red lead (sold by Hubron Ltd under the trademark Kenlastic D6642) | 8.79 |
| Filler grade light magnesium oxide (from Croxton & Garry Ltd) | 4.18 |
| Carbon black (sold by Cabot Carbon Ltd under the reference N550) | 5.85 |
| Trioctyl trimellitate plasticiser (sold by British Petroleum Ltd under the trademark Bisoflex TOT) | 8.72 |
| Coumarone-resin based plasticiser (sold by Hubron Ltd under the trademark Kenflex A) | 2.34 |
| Petroleum Jelly (from British Petroleum Ltd) | 1.21 |
| Petroleum Slack Wax (sold by British Petroleum Ltd under the designation 55) | 0.76 |
| Nickel dibutyl dithiocarbamate (sold by Robinson Brothers Ltd as NBUD-PM) | 1.57 |
| Dibenzothiazyl disulphide (sold by Monsato (UK) Ltd as MBTS | 0.39 |
| Dipentamethylene thiuram tetrasulphide (sold by Robinson Brothers Ltd as ROBAC P25 PM | 1.04 |

## Claims

1. An electric cable joint comprising at least one joint (5) between line or phase conductors (3) of the jointed cables (1,2) that is surrounded by a sleeve (6) made of electrically insulating material and encapsulated with it in a body of resin (9) that is introduced into a joint enclosure or mould (10) in a fluid state and caused or allowed to harden, said resin (9) having electrical properties inferior to those of the sleeve (6) *characterised* by the sleeve (6) being made of a material with a relative permittivity in the range from 6 to 20.

2. A joint as claimed in claim 1 in which the sleeve (6) is based on chlorosulphonated polyethylene rubber.

3. A joint as claimed in claim 1 or claim 2 in which the sleeve (6) is moulded.

4. A joint as claimed in claim 1 or claim 2 in which the sleeve (6) is extruded.

5. A joint as claimed in any one of the preceding claims in which the sleeve (6) is a loose fit over the insulated conductor (3) to which it is applied.

6. A joint as claimed in any one of the preceding claims in which the sleeve (6) is formed with internal projections (11).

7. A joint as claimed in claim 6 in which the projections (11) are longitudinal ribs (11).

8. A joint as claimed in Claim 7 in which there are four such ribs (11).

## Patentansprüche

1. Elektrische Kabelverbindung mit mindestens einem Verbinder (5) zwischen Netz- oder Phasenleitern (3) der verbundenen Kabel (1, 2), der von einer aus einem elektrisch isolierenden Material bestehenden Hülse (6) umgeben ist und mit ihr in einem Körper aus einem Harz (9) eingekapselt ist, das in flüssigem Zustand in einen Verbindermantel oder -Form (10) eingebracht und ausgehärtet wird oder aushärten kann, wobei die elektrischen Eigenschaften des Harzes (9) schlechter als die der Hülse (6) sind, dadurch gekennzeichnet, daß die Hülse (6) aus einem Material mit einer relativen Dielektrizitätskonstante im Bereich von 6 bis 20 besteht.

2. Verbindung nach Anspruch 1, wobei die Hülse (6) hergestellt ist auf der Basis eines chlorsulfonierten Polyethylen-Kautschuks.

3. Verbindung nach Anspruch 1 oder 2, wobei die Hülse (6) in einer Form hergestellt ist.

4. Verbindung nach Anspruch 1 oder 2, wobei die Hülse (6) extrudiert ist.

5. Verbindung nach einem der vorstehenden Ansprüche, wobei die Hülse (6) auf dem isolierten Leiter (3), auf den sie aufgebracht ist, lose angepaßt ist.

6. Verbindung nach einem der vorstehenden Ansprüche, wobei die Hülse (6) mit inneren Vorsprüngen (11) versehen ist.

7. Verbindung nach Anspruch 6, wobei die Vorsprünge (11) Längsrippen (11) sind.

8. Verbindung nach Anspruch 7, wobei vier derartige Rippen (11) vorgesehen sind.

## Revendications

1. Jonction de câbles électriques comprenant au moins un raccord (5) entre des conducteurs (3) de ligne ou de phase des câbles réunis (1, 2) qui est entouré d'un manchon (6) fait d'un matériau électro-isolant enfermé avec lui dans un corps en résine (9) que l'on introduit dans un moule (10) ou enveloppe de jonction à l'état liquide et qu'on laisse ou fait refroidir, ladite résine (9) ayant des propriétés électriques inférieures à celles du manchon (6),
caractérisée par le fait que le manchon (6) est fait d'un matériau ayant une permittivité relative dans la fourchette de 6 à 20.

2. Jonction selon la revendication 1, dans laquelle le manchon (6) est à base de caoutchouc de polyéthylène chlorosulfoné.

3. Jonction selon la revendication 1 ou 2, dans laquelle le manchon (6) est moulé.

4. Jonction selon la revendication 1 ou 2, dans laquelle le manchon (6) est extrudé.

5. Jonction selon l'une quelconque des précédentes revendications, dans laquelle le manchon (6) est emboîté avec jeu sur le conducteur isolé (3) auquel il est appliqué.

6. Jonction selon l'une quelconque des précédentes revendications, dans laquelle le manchon (6) comporte des saillies intérieures (11).

7. Jonction selon la revendication 6, dans laquelle les saillies (11) sont des nervures longitudinales (11).

8. Jonction selon la revendication 7, dans laquelle il y a quatre de ces nervures (11).
